Europäisches Patentamt

European Patent Office

Office européen des brevets

(19)

(11) EP 1 569 172 A2

(12) **EUROPEAN PATENT APPLICATION**

(43) Date of publication:
31.08.2005 Bulletin 2005/35

(51) Int Cl.$^7$: **G06T 15/70**

(21) Application number: 05250251.5

(22) Date of filing: 19.01.2005

(84) Designated Contracting States:
**AT BE BG CH CY CZ DE DK EE ES FI FR GB GR HU IE IS IT LI LT LU MC NL PL PT RO SE SI SK TR**
Designated Extension States:
**AL BA HR LV MK YU**

(30) Priority: 26.02.2004 KR 2004012985
08.03.2004 KR 2004015607

(71) Applicant: **SAMSUNG ELECTRONICS CO., LTD. Gyeonggi-do (KR)**

(72) Inventors:
• **Ahn, Jeonghwan**
**Gangseo-gu Seoul (KR)**
• **Kim, Dokyoon**
**Seongnam-si Gyeonggi-do (KR)**
• **Woo, Sangoak**
**Dongan-gu Anyang-si Gyeonggi-do (KR)**

(74) Representative: **Greene, Simon Kenneth**
**Elkington and Fife LLP,**
**Prospect House,**
**8 Pembroke Road**
**Sevenoaks,**
**Kent TN13 1XR (GB)**

(54) **Data structure for cloth animation, and apparatus and method for rendering three-dimensional graphics data using the data structure**

(57) Provided are a data structure for cloth animation and an apparatus and method for rendering 3D graphics data by using the data structure. The data structure for cloth animation includes a vertical granulation field which defines granulation along the vertical axis of a planar mesh of cloth, a horizontal granulation filed which defines granulation along the horizontal axis of the planar mesh of cloth, a height field which defines the height of the planar mesh of cloth, a width field which defines the width of the planar mesh of cloth, and a physical characteristics node which defines values for physical characteristics used for calculating external and internal forces acting on the cloth, a shift position of the cloth due to the forces, and a shift position of the cloth due to a collision of the cloth with an object. The 3D graphics data rendering apparatus includes an analyzer for outputting a scene graph obtained by discriminating nodes and analyzing fields from 3D graphics data having the data structure for the cloth animation, a calculator for calculating physical quantities for the cloth animation from the node and field of the scene graph, and outputting the scene graph including the calculated physical quantities, and a converter for converting the scene graph including the calculated physical quantities into a 2D image and outputting the 2D image.

FIG. 4

```
ClothAnimPhys    {
    exposedfield    SFVec3f    gravity           0.0 0.0 0.0
    exposedfield    SFVec3f    wind              0.0 0.0 0.0
    exposedfield    SFFloat    timeStep          0.004
    exposedfield    SFFloat    dissipativeCoeff  0.5
    exposedfield    SFFloat    nodeMassInv       3.429
    exposedfield    SFFloat    airResistCoeff    0.4
    exposedfield    SFFloat    maxElongation     0.03
    exposedfield    SFFloat    stiffnessStructH  2.0
    exposedfield    SFFloat    stiffnessStructW  2.0
    exposedfield    SFFloat    stiffnessShear    2.6
    exposedfield    SFFloat    stiffnessBendH    0.0
    exposedfield    SFFloat    stiffnessBendW    0.0
}
```

EP 1 569 172 A2

**Description**

The present invention relates to rendering of three-dimensional graphics data, and more particularly, to a data structure for cloth animation which allows cloth to be realistically animated in real time, and an apparatus and method for rendering three-dimensional graphics data using the data structure.

In order to read data from files for storing three-dimensional (3D) graphics data and output the data to a screen, an apparatus is required which analyzes the 3D graphics data and records the 3D graphics data on a video memory for storing data to be output to the screen. In general, the apparatus is called a 3D graphics rendering engine.

In general, 3D graphics data includes information on the geometry of an object located in a three-dimensional space, material of the object, position and characteristics of a light source, and variation of such information with time. Examples of the information on the geometry of the object include locations of 3D fixed points composing the object, links of the fixed points, etc. Examples of the information on the material of the object include colors, the light reflectance of a surface, etc. Such information is represented in an intuitively or logically understandable structure so that users can create and modify the 3D graphics data easily. The structure is typically called a scene graph which has an acyclic tree structure. The scene graph is composed of nodes including information on the geometry or material of the object, and information on links of the nodes. In other words, the node is one of elementary components of the scene graph. Fields define specific characteristics of the node.

Recently, as a rendering processor for 3D graphics data has improved in performance, desire for a more realistic representation of natural objects has increased. Conventional 3D graphics techniques have animated 3D models in a simple manner. In recent years, it has become easy to perform to be suitable for virtual environments and to express the imagination of a developer by representing natural phenomena, such as running water, wind, and smoke, and the motion of a person's hair or clothes.

In representing the motion of cloth, both intrinsic characteristics of cloth and external physical factors such as gravity, wind, acceleration, and air resistance must be considered. In addition, effects of contact with external objects on the cloth should be considered.

Recently, a number of methods of taking these physical factors into consideration in animation have been proposed. However, since the proposed methods are performed in their own formats, it is impossible to render and animate general purpose 3D graphics models. In addition, it is difficult for users to perform authoring due to the complicated physical characteristics of objects. In addition, rendering tools and authoring tools are incompatible because they use different formats. In addition, there has been a problem in that created models cannot be reused.

According to an aspect of the present invention, there is provided a data structure for cloth animation comprising: a vertical granulation field which defines granulation along the vertical axis of a planar mesh of cloth; a horizontal granulation field which defines granulation along the horizontal axis of the planar mesh of cloth; a height field which defines the height of the planar mesh of cloth; a width field which defines the width of the planar mesh of cloth; and a physical characteristics node which defines values for physical characteristics used for calculating external and internal forces acting on the cloth, shift position of the cloth due to the forces, and shift position of the cloth due to a collision of the cloth with an object.

The physical characteristics node, in order to calculate the external forces acting on the cloth, may comprise a gravitational acceleration field which defines gravitational acceleration used for calculating gravity; a wind velocity field which defines wind velocity used for calculating air resistance; a buffer coefficient field which defines a buffer coefficient used for calculating an external buffering force; and an air resistance coefficient field which defines a resistance coefficient used for calculating the air resistance. In addition, the physical characteristics node, in order to calculate the internal forces acting on the cloth, may comprise a maximum elongation field which defines a maximum elongation of a spring linking mass-points on a lattice composing the planar mesh of the cloth; a planar force resistance coefficient field which defines a resistance coefficient of a spring linking each mass-point in the lattice with neighboring mass-points on the right, the left, above, and below; a shift deformation resistance coefficient field which defines a resistance coefficient of a spring linking each mass-point with neighboring mass-points in a diagonal direction; and a torsion resistance coefficient field which defines a resistance coefficient of a spring linking each mass-point with every second neighboring mass-point on the right, the left, above, and below. In addition, the physical characteristics node may comprise an inverse mass field which defines an inverse mass of each of the mass-points in the lattice used for obtaining acceleration used for calculating the shift position of the cloth due to the forces acting on the cloth. In addition, the physical characteristics node may comprise a time interval field which defines a time interval used for calculating the shift position of the cloth.

The data structure may further include a fixed edge field which defines an edge of the mesh of cloth that is fixed. In addition, the data structure may further include a collision node used for calculating the shift position of the cloth due to collision of the cloth with an object and representing the object. The collision node may comprise a friction coefficient field used for calculating shift velocity of a point at which the object collides with the cloth; a kinematics node which defines a virtual object colliding with the cloth; and a visible shape node used for actually representing the object colliding with the cloth.

According to another aspect of the present invention, there is provided a 3D graphics data rendering apparatus comprising: an analyzer for outputting a scene graph obtained by discriminating nodes and analyzing fields from 3D graphics data having the data structure for the cloth animation; a calculator for calculating physical quantities for the cloth animation from the node and field of the scene graph and outputting the scene graph including the calculated physical quantities; and a converter for converting the scene graph including the calculated physical quantities into a 2D image and outputting the 2D image. The calculator may comprise a cloth discriminating unit for discriminating the nodes of the cloth in the scene graph; a cloth mesh creating unit for creating a mesh of the cloth according to the node and field values; a colliding object discriminating unit for discriminating whether there is an object colliding with the cloth; a collision detection unit for inspecting whether the cloth collides with the object; a physical quantity calculating unit for calculating physical quantities which represent the internal and external forces acting on the cloth and shift position of the cloth due to the collision with the object; and a cloth mesh deforming unit for deforming the structure of the cloth by applying the shift position of the cloth calculated by the physical quantity calculating unit to the mesh of cloth, and outputting the scene graph including the physical quantities. The collision detection unit may detect whether the cloth collides with the virtual object defined by the kinematics node. In addition, the collision detection unit may detect the location of a collision point when the cloth collides with the virtual object defined by the kinematics node.

According to another aspect of the present invention, there is provided a 3D graphics data rendering method comprising: (a) outputting a scene graph obtained by discriminating nodes and analyzing fields from 3D graphics data having the data structure for the cloth animation; (b) calculating physical quantities for the cloth animation from the nodes and fields of the scene graph and outputting the scene graph including the calculated physical quantities; and (c) converting the scene graph including the calculated physical quantities into a 2D image and outputting the 2D image.

The present invention provides a data structure for cloth animation which defines nodes and fields for a realistic and real-time animation of cloth in commercial programs such as virtual reality modeling language (VRML), moving picture experts group (MPEG), 3D MAX, Maya, etc.

The present invention also provides an apparatus and method for rendering 3D graphics data which renders a 3D cloth model into a 2D image by using the data structure for cloth animation.

The above and other features and advantages of the present invention will become more apparent by describing in detail exemplary embodiments thereof with reference to the attached drawings in which:

FIG. 1 is a diagram showing a geometric structure of cloth;
FIG. 2 is a diagram showing the cloth of FIG. 1 represented in a triangular mesh in an "x-z" coordinate system;
FIG. 3 is a diagram showing an example of node and field values used in a ClothAnim node according to the present invention;
FIG. 4 is a diagram showing an example of field values used in a ClothAnimPhy node;
FIG. 5A is a diagram showing an example of node and field values used in a colliders node, FIG. 5B is a diagram showing an example of field values used in a TruncatedCone node, and FIG. 5C is a diagram showing an example of a field value used in a kinematics node;
FIG. 6 is a block diagram showing the structure of an apparatus for rendering 3D graphics data according to the present invention;
FIG. 7 is a detailed block diagram of an analyzer shown in FIG. 6;
FIG. 8 is a detailed block diagram of a calculator shown in FIG. 6;
FIG. 9 is a detailed block diagram of a converter shown in FIG. 6;
FIG. 10 is a flowchart showing a 3D graphics data analyzing process in a rendering method according to the present invention;
FIG. 11 is a flowchart showing a calculating process in a rendering method according to the present invention;
FIG. 12 is a flowchart showing process of converting a scene graph including calculated physical quantities into a 2D image in a rendering method according to the present invention;
FIG. 13 is a diagram showing an example of rendering using nodes and fields defined according to the present invention;
FIG. 14 is a diagram showing an example of rendering using a conventional interpolator node;
FIG. 15 is a diagram showing an example of animated collision of a spherical object with the cloth by a rendering method according to the present invention;
FIG. 16 is a diagram showing a colliders node used for implementing the animation of FIG. 15; and
FIG. 17 is a diagram showing a ClothAnim node used for implementing FIG. 15.

Exemplary embodiments of the present invention will now be described in detail with reference to the accompanying drawings.

First, a physical model of cloth is set forth.

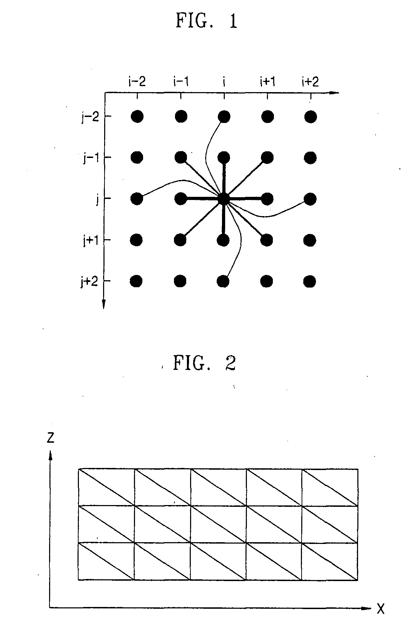

FIG. 1 shows a geometric structure of cloth. Modeling of the cloth takes advantage of a rectangular lattice composed of mass-points, as disclosed in "Deformation Constraints In a Mass-Spring Model to Describe Rigid Cloth Behavior", by X. Provot, Graphics Interface '95, pp.147-158. Each mass-point is linked to neighboring mass-points by three different types of springs.

First, springs which link a mass-point (i, j) to mass-points (i+1, j), (i-1, j), (i, j+1), and (i, j-1), the thickest solid lines in FIG. 1, exhibit a frame of the cloth. The springs resist tension within a plane surface of the cloth.

Secondly, springs which link the mass-point (i, j) to mass-points (i+1, j+1), (i-1, j+1), (i+1, j-1), and (i-1, j-1), the middle-thickness solid lines in FIG. 1, resist shift deformation within a plane surface of the cloth.

Thirdly, springs which link the mass-point (i, j) to mass-points (i+2, j), (i-2, j), (i, j+2), and (i, j-2), the thinnest solid lines in FIG. 1, resist torsion from the outside of a plane surface of the cloth.

Next, forces on acting each mass-point in the lattice are set forth.

Motion of each mass-point is governed by Newton's second law of motion as shown in Equation 1.

## [Equation 1]

$$m_{ij}\ddot{\mathbf{x}}_{ij} = \mathbf{F}_{ij}$$

where $m_{ij}$ denotes the mass of a mass-point (i, j) in a lattice, $\mathbf{x}_{ij}$ denotes a spatial position vector of the mass-point, and $\mathbf{F}_{ij}$ denotes the net force vector acting on the mass-point.

Internal and external forces act on each mass-point. The internal forces are produced by the elastic links between neighboring mass-points. The external forces include gravity, air resistance, buffering force, etc.

The internal forces are now set forth.

Let $T(i,j)$ be a set of mass-points (k, l). The mass-points (k, l) are linked to the mass-points (i, j) by springs. In this case, the internal forces, $\mathbf{F}_{ij}^{int}$, acting on the mass-points (i, j) can be calculated as follows:

[Equation 2]
$$\mathbf{F}_{ij}^{int} = \sum_{(k,l)\in T(i,j)} K_{ijkl}\left(1 - \frac{L_{ijkl}}{\left|\mathbf{r}_{kl} - \mathbf{r}_{ij}\right|}\right)\left(\mathbf{r}_{kl} - \mathbf{r}_{ij}\right)$$

where $K_{ijkl}$ denotes the stiffness (spring constant) of a spring linking the mass-point (i, j) with the mass-point (k, l), $L_{ijkl}$ denotes the length of the spring in an equilibrium state, $r_{ij}$ denotes a position vector of the mass-point (i, j), and $r_{kl}$ denotes a position vector of the mass-point (k, l).

Next, the external forces can be largely classified into gravity, buffering force, air resistance, and relative acceleration.

The force of gravity, $\mathbf{F}_{ij}^{g}$, is defined by Equation 3.

## [Equation 3]

$$\mathbf{F}_{ij}^{g} = m_{ij}\mathbf{g}$$

where $m_{ij}$ is mass of a mass-point (i, j), and $\mathbf{g}$ is the vector acceleration due to gravity.

The external buffering force, $\mathbf{F}_{ij}^{d}$, is defined by Equation 4.

## [Equation 4]

$$\mathbf{F}_{ij}^{d} = -\mu\mathbf{v}_{ij}$$

where $\mu$ is a buffer coefficient, and $\mathbf{v}_{ij} \equiv \mathbf{r}_{ij}$ is a velocity vector of the mass-point (i, j).

The force of air resistance, $\mathbf{F}_{ij}^{a}$, is defined by Equation 5.

## [Equation 5]

$$\mathbf{F}_{ij}^{a} = c(\mathbf{n}_{ij} \cdot (\mathbf{u}_{w} - \mathbf{v}_{ij}))\mathbf{n}_{ij}$$

where $c$ is a resistance coefficient, $\mathbf{n}_{ij}$ is a normal vector of the mass-point $(i, j)$, and $\mathbf{u}_w$ is a wind velocity vector.

The force due to relative acceleration, $\mathbf{F}^r_{ij}$, is defined by Equation 6.

[Equation 6]

$$F^r_{ij} = -m_{ij}(a_0 + \varepsilon \times r_{ij} + \omega \times (\omega \times r_{ij}) + 2\omega \times v_{ij})$$

where $\mathbf{a}_0$ is a linear acceleration vector, and $\omega$ and $\varepsilon$ are angular velocity and angular acceleration vectors, respectively, in a coordinate system in which the motion of a portion of the cloth is considered.

The net force, $\mathbf{F}_{ij}(t)$, is obtained by summing up the internal and external forces as follows:

[Equation 7]

$$F_{ij}(t) = F^{int}_{ij} + F^g_{ij} + F^d_{ij} + F^a_{ij} + F^r_{ij}$$

In order to calculate the shift positions of the mass-points, Euler's method, an elementary numerical analysis method, is used. The spatial location vector, $\mathbf{r}_{ij}$, and the velocity vector, $\mathbf{v}_{ij}$, for all mass-points are assumed to be known at time t. The location and velocity vectors for all mass-points at time t+T are calculated as follows:

[Equation 8]

$$r_{ij}(t + \tau) = r_{ij}(t) + v_{ij}(t)\tau$$

[Equation 9]

$$v_{ij}(t + \tau) = v_{ij}(t) + a_{ij}(t)\tau$$

where $\mathbf{r}_{ij}$ and $\mathbf{v}_{ij}$ are the first and second terms in the Taylor's series expansion when $\mathbf{r}_{ij}$ and $\mathbf{v}_{ij}$ are assumed to be differentiable at time t. Thus, the approximate position at time t+T can be obtained. In addition, the approximate velocity at time t+T can be obtained from Equation 9. The acceleration vector of the mass-point required for Equation 9 is obtained as follows:

[Equation 10]
$$\mathbf{a}_{ij}(t) = \frac{1}{m} \mathbf{F}_{ij}(t)$$

Next, a collision of the cloth with another object is set forth.

It is assumed that the cloth collides with a rigid body having a predetermined shape, such as sphere, cone, cylinder, or rectangle.

At this time, two steps should be performed. A first step is to detect whether a certain mass-point of the cloth is located in the colliding object, in order to determine whether a collision in fact occurs. A second step is to detect a colliding location on a surface of the colliding object on which a certain mass-point of the cloth is projected, in order to calculate the shift position of the cloth due to the collision.

According to such a method, the shift position of the mass-point of the cloth can be calculated without detecting penetration moment.

When the position vector of the mass-point of the cloth, $\mathbf{y}_{ij}$, is located on the colliding object, the velocity vector, $\mathbf{v}_{ij}$, is calculated as follows:

[Equation 11]
$$\mathbf{v}_{ij} = \begin{cases} \mathbf{v}_t \left(1 - k_f \dfrac{|\mathbf{v}_n|}{|\mathbf{v}_t|}\right), & |\mathbf{v}_t| \geq k_f |\mathbf{v}_n| \\ 0, & |\mathbf{v}_t| < k_f |\mathbf{v}_n| \end{cases}$$

where $\mathbf{v}_t$ and $\mathbf{v}_n$ are a tangential velocity component vector and a normal velocity component vector of the mass-point at a position of the mass-point, $\mathbf{y}_{ij}$, respectively, and $k_f$ is a friction coefficient at a penetration point. In order to obtain necessary values, such as velocity, a normal line to the surface of the object, and a friction coefficient, it is assumed that the position of the mass-point, $\mathbf{y}_{ij}$, is projected onto the surface of the object and a penetration phenomenon occurs at the projected location.

When positions of all mass-points of the cloth at time steps are obtained according to Euler's method, the position vector of the mass-point of the cloth, $\mathbf{y}_{ij}$, can be obtained at time t+T as follows:

[Equation 12]

$$y_{ij}(t + \tau) = x_{ij}(t) + \tau v_{ij}(t)$$

Meanwhile, a data structure for the cloth animation can be defined by ClothAnim, clothAnimPhys, and colliders nodes.

As described above in conjunction with FIG. 1, the cloth is modeled by using a rectangular lattice composed of the mass-points, and each of the mass-points moves due to internal and external forces. In addition, each of the mass-points moves due to collision with a spherical or rectangular rigid body. FIG. 2 shows the cloth represented in a triangular mesh in an "x-z" coordinate system.

The ClothAnim node is composed of field values for the mass-points which represent the cloth having the mesh structure of FIG.2, and nodes and field values related to the internal forces, the external forces, and the collision acting on the mass-points.

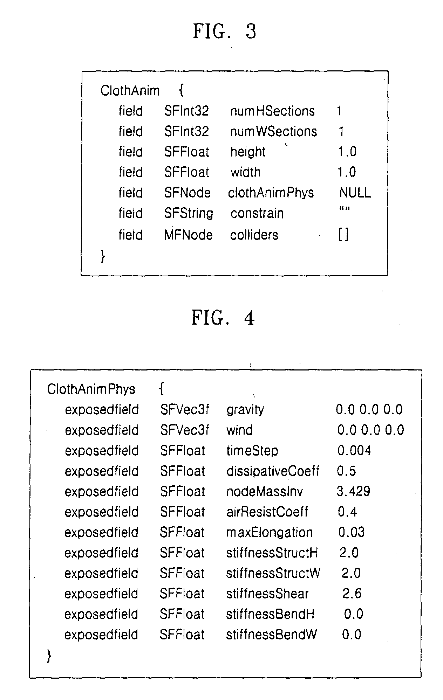

An example of the nodes and field values used for the ClothAnim node is shown in FIG. 3.

Fields for the ClothAnim node include a numHSections field, a numWSections field, height and width fields, a clothAnimPhys node, a constrain field, and a colliders node.

The numHSections field defines granulation of a planar mesh along the "z" axis, and the numWSections field defines granulation of the planar mesh along the "x" axis. In FIG. 2, the numHSections is 3 and the numWSections is 5. The height field defines the height of the planar mesh along the "z" axis. The width field defines the width of the planar mesh along the "x" axis.

The planar mesh of the cloth in FIG. 2 is composed of the numHSections, numWSections, height and width fields. The height field value divided by the numHSections field value, and the width field value divided by the numWSections field value are $L_{ijkl}$ of an initial state in Equation 2 for obtaining the internal force.

The clothAnimPhys node defines physical characteristics of the cloth. Several ClothAnim nodes may share the clothAnimPhys node. If clothAnimPhys is NULL as shown in FIG. 3, the value for the node is not defined and a predetermined value is used. The fields of the clothAnimPhys node are set forth later.

The constrain field has any one of "left", "right", "top", and "bottom" strings. The constrain field defines a fixed edge in the mesh of the rectangular cloth. When the field is set to "left", the left edge does not move but all other edges can move in the mesh of the cloth. The constrain field can be used in animation in which a flag fixed to a flagpole flutters in the wind. However, if the string is not defined in the constrain field as shown in FIG. 3, all edges can move.

The colliders node has a "Kinematics" node to be considered in collision detection, which is described later.

The motion of the cloth is determined by internal forces between mass-points and the external forces such as gravity, air resistance, and buffering force. The clothAnimPhys node has values for these forces.

An example of field values used in the clothAnimPhys node is shown in FIG. 4. The clothAnimPhys node is composed of a gravity field, a wind field, a timeStep field, a dissipativeCoeff field, a nodeMassInv field, an airResistCoeff field, a maxElongation field, a stiffnessStructH field, a stiffnessStructW field, a stiffnessShear field, a stiffnessBendH field, and a stiffnessBendW field. Among these fields, the gravity field defines a gravitational acceleration vector, g, and is used for calculating gravity. The wind field defines a wind velocity vector, $\mathbf{u}_w$, and is used for calculating air resistance. The timeStep field defines a time interval, T, used for calculating the location and velocity of the mass-point according to Euler's method. The dissipativeCoeff field defines a buffer coefficient, $\mu$, which is used for calculating the external buffering force. The nodeMassInv field defines the inverse mass of the mass-point, $m^{-1}$, and is used for calculating the acceleration due to the internal and external forces. Assuming that the density of the cloth is uniform, the mass of each of the mass-points can be regarded to be the same. The airResistCoeff field defines a resistance coefficient, c, which is used for calculating the air resistance. The maxElongation field defines a maximum elongation of a spring which links the mass-points. If the spring is over elongated, it retracts forcibly. The stiffnessStructH field defines the stiffness of the spring along the "z" axis. The spring resists tension within the plane surface of the cloth. The stiffnessStructW field defines stiffness of the spring along the "x" axis. The spring resists tension within the plane surface of the cloth. The stiffnessShear field defines the stiffness of the spring which links mass-points in a diagonal direction. The value corresponds to the shift deformation (shear) within the plane surface of the cloth. The stiffness-

BendH field defines the stiffness of the spring which links every other neighboring mass-point in the direction of the "z" axis. The spring resists torsion from the outside of the plane of the cloth. The stiffnessBendW field defines the stiffness of the spring which links every other neighboring mass-point in the direction of the "x" axis. The spring resists torsion from the outside of the plane surface of the cloth. The stiffnessStructH field, stiffnessStructW field, stiffnessShear field, stiffnessBendH field, and stiffnessBendW field are $K_{ijkl}$ used for calculating the internal force.

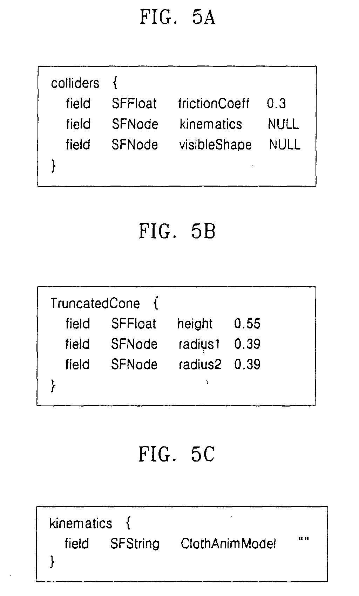

The colliders node defines a collision of the ClothAnim node. An example of the colliders node and field values is shown in FIG. 5A. The colliders node is composed of a frictionCoeff field, a kinematics node, and a visibleShape node. The frictionCoeff field defines a friction coefficient, $k_f$, which is used in a collision response process.

The kinematics node defines a virtual object colliding with the ClothAnim node. There are two methods of defining the kinematics node.

First, the DEF name of the kinematics node can be defined in a field of the colliders node in the ClothAnim node. In this field, the kinematics node can have two geometry nodes which are already defined in the VRML standard, Box and Sphere nodes, and a geometry node which is not defined in the VRML standard, a TruncatedCone node. In case of the "Sphere" node, the radius of the sphere should be defined and the sphere has the same shape as the Sphere node used in the VRML standard. In case of the "Box" node, the size of the box should be defined and the box has the same shape as the Box node used in the VRML standard. In case of the "TruncatedCone" node, its height and the radii of its upper and lower surfaces should be defined. If the radii of its upper and lower surfaces are the same, it has the shape of a cylinder. If the radius of either the upper surface or the lower surface is 0, it has the shape of a cone. An example of the TruncatedCone node is shown in FIG. 5B.

Secondly, the kinematics node can have a value for the clothAnimModel field which defines a virtual object which collides with the ClothAnim node. An example of the kinematics node is shown in FIG. 5C. The clothAnimModel can have three primitive shapes, "Sphere", "Box", and "TruncatedCone", which are the same as those of the geometry node.

The visibleshape node is used for showing the object which collides with a real cloth on a screen and has the Shape node defined in the VRML standard.

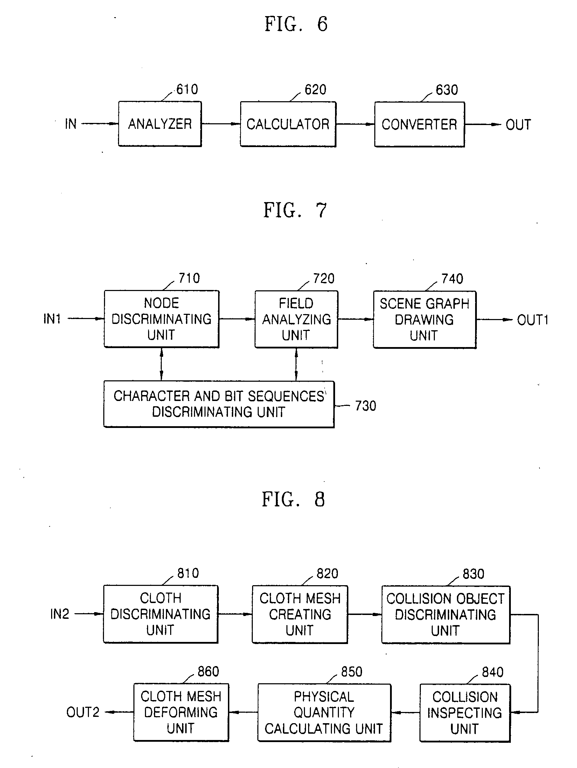

Next, a rendering apparatus and method according to the present invention will be described in detail with reference to FIGS. 6 to 13.

FIG. 6 is a block diagram of a rendering apparatus according to the present invention. The rendering apparatus comprises an analyzer 610, a calculator 620, and a converter 630.

The analyzer 610 outputs a scene graph which is obtained by discriminating nodes and analyzing fields from 3D graphics data IN having the data structure for the cloth animation.

The calculator 620 calculates physical quantities for the cloth animation from the nodes and fields of the scene graph and outputs the scene graph including the calculated physical quantities.

The converter 630 converts the scene graph including the calculated physical quantities into a 2D image OUT and outputs the converted image.

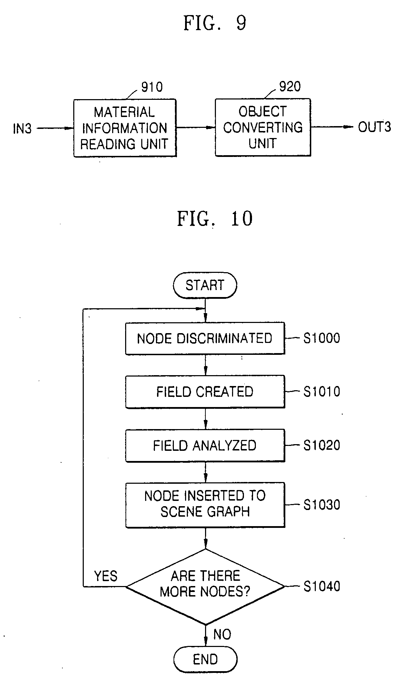

FIG. 7 is a block diagram of the analyzer 610 of FIG. 6. The analyzer 610 comprises a node discriminating unit 710, a field analyzing unit 720, a character and bit sequences discriminating unit 730, and a scene graph drawing unit 740. The function of each unit of the analyzer 610 will now be described with reference to FIG. 10, which is a flowchart showing a process of analyzing 3D graphics data.

The node discriminating unit 710 discriminates nodes from the 3D graphics data IN1 (operation S1000). The character and bit sequences discriminating unit 730 analyzes character sequences of the node input from the node discriminating unit 710 and outputs the analyzed character sequences of the node to the node discriminating unit 710. According to the discriminated nodes, the node discriminating unit 710 can discriminate whether the 3D graphics data is information on the geometry of an object, the material of an object, etc. Next, a space to be filled with fields is created in the node analyzed in the node discriminating unit 710 (operation S1010). The character and bit sequences discriminating unit 730 analyzes characters or binary bit sequences of the fields input from the field analyzing unit 720 and outputs the analyzed sequences to the field analyzing unit 720. The field analyzing unit 720 analyzes the 3D graphics data to fill the space with the field values (operation S1020). The scene graph drawing unit 740 outputs the scene graph OUT1 constituted by inserting nodes having the analyzed field values (operation S1030). The scene graph has nodes including information on the geometry of mass-points composing the cloth, such as positions and links of the mass-points, material of the cloth, and so on. Next, in the analyzing process, it is determined whether the 3D graphics data has more nodes to be analyzed (operation S1040). If the 3D graphics data has more nodes to be analyzed, the analyzing process returns to operation S1000 and is reiterated. If not, the analyzing process is ended.

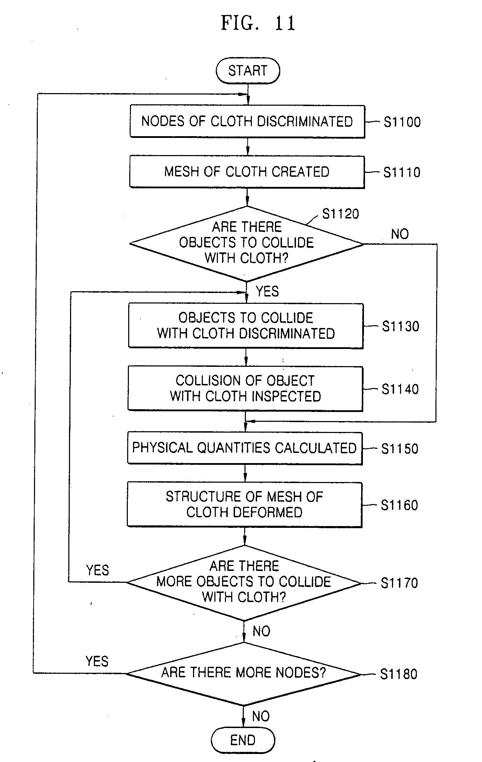

FIG. 8 is a block diagram showing the calculator 620 of FIG. 6. The calculator 620 comprises a cloth discriminating unit 810, a cloth mesh creating unit 820, a colliding object discriminating unit 830, a collision detection unit 840, a physical quantity calculating unit 850, and a cloth mesh deforming unit 860. The function of each unit of the calculator 620 will now be described with reference to FIG. 11, which is a flowchart showing a process of calculating the scene graph performed in the calculator 620.

The cloth discriminating unit 810 discriminates the nodes of the cloth in an input scene graph IN2 (operation S1100). The cloth mesh creating unit 820 creates a mesh of the cloth according to the nodes and fields analyzed in the analyzer 610 (operation S1110). Next, the colliding object discriminating unit 830 determines whether there is an object colliding with the cloth in the input scene graph IN2, that is, whether there is a colliders node (operation S1120). If there is no object colliding with the cloth, the calculating process proceeds to operation S1150.

If there is an object colliding with the cloth in operation S1120, the geometry of the colliding object is discriminated from the information on the geometry of the colliders node (operation S1130). The collision detection unit 840 detects whether the object collides with the cloth (operation S1140). In addition, the collision detection unit 840 detects whether a virtual object defined by the kinematics node collides with the cloth. If the virtual object collides with the cloth, the collision detection unit 840 detects the position of the collision point.

Next, if there is an object colliding with the cloth, the physical quantity calculating unit 850 calculates the physical quantities such as the internal and external forces, the shift position of the cloth due to these forces, the shift position of the cloth due to the collision, etc. If not, the physical quantity calculating unit 850 calculates the physical quantities such as the internal and external forces, the shift position of the cloth due to these forces, etc. (operation S1150). The calculated forces and shift position are the same as described above. The cloth mesh deforming unit 860 deforms the structure of the mesh of the cloth on the basis of the calculated physical quantities, and outputs the scene graph including the calculated physical quantities (operation S1160). Next, the calculating process determines whether there are more objects to collide with the cloth (operation S1170). If there are more objects to collide with the cloth, the calculating process returns to operation S1130. If not, the calculating process determines whether there are more nodes to calculate (operation S1180). If there are more nodes to calculate, the calculating process returns to operation S1100. If not, the calculating process of the scene graph is ended.

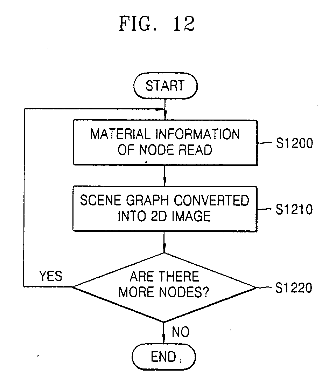

FIG. 9 is a block diagram showing the converter 630 of FIG. 6. The converter 630 comprises a material information reading unit 910 and an object converting unit 920. The function of each unit of the converter 630 will now be described with reference to FIG. 12, which is a flowchart showing a converting process of the scene graph into a 2D image.

The material information reading unit 910 reads information on the material of the node from the scene graph IN3 input from the calculator 620 (operation S1200). For instance, the information on the material of the node includes texture, transparency, etc. The object converting unit 910 converts the scene graph having the information on the physical quantities calculated by using the information on the material into a 2D image OUT3 through an appropriate conversion of coordinates, and outputs the converted image (operation S1210). Next, the material information reading unit 910 determines whether there are more nodes to convert (operation S1220). If there are more nodes to convert, the converting process returns to operation S1200 and is reiterated. If not, the converting process is ended.

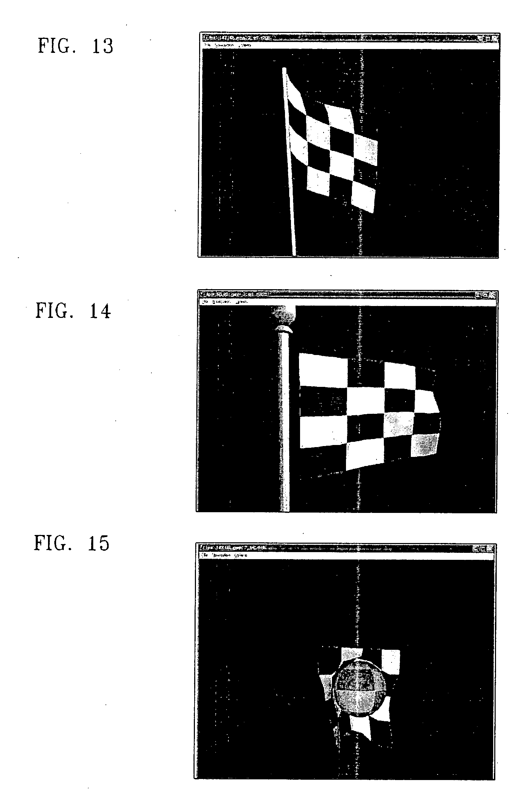

FIG. 13 shows an example of rendering using the nodes and fields defined according to the present invention. FIG. 14 shows an example of rendering using a conventional interpolator node. The file for an example of FIG. 13 is 1,568 bytes in size, and the file for an example of FIG. 14 is 1,375,061 bytes in size. Therefore, the rendering method according to the present invention uses a file that is approximately 876 times smaller in size than the file used in the conventional method of using the interpolator node.

FIG. 15 shows an example of an animated collision of a spherical object with the cloth created by the rendering method according to the present invention. A naturally crumpled shape can be seen when the spherical object collides with the cloth.

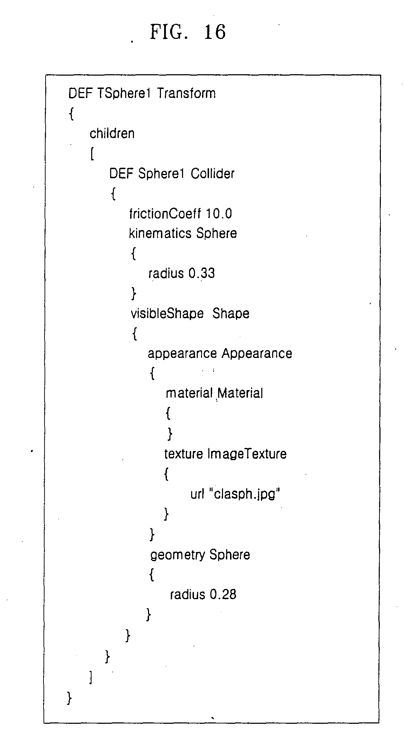

FIG. 16 shows a colliders node used for implementing the animation of FIG. 15. The colliders node has a frictionCoeff field in order to define a friction coefficient used during a collision response process. In addition, the kinematics node may have a geometry node called Sphere, and defines the object colliding with the cloth. The visibleshape node has an appearance node called Appearance and a geometry node called Sphere. Here, the appearance node has information on the appearance. The material node has information on colors of the colliding object. When a path of an image is written to a url field of the texture node, the image is applied.

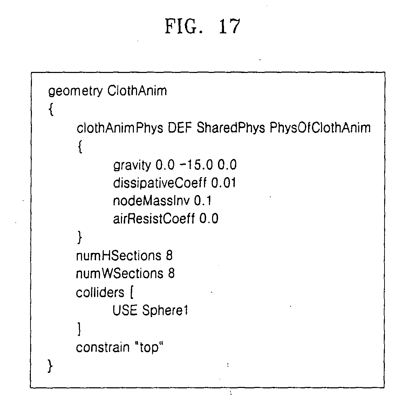

FIG. 17 shows a ClothAnim node which uses the colliders node of FIG. 16 for implementing the animation of FIG. 15. The ClothAnim node performs the animation of the cloth by calling the colliders node.

The present invention can be implemented as computer-readable codes stored on computer-readable recording media. The computer includes all apparatuses having the function of information processing. The computer-readable recording media includes all kinds of recording apparatuses for storing data which can be read by a computer system. Examples of the computer-readable recording apparatuses include ROM, RAM, CD-ROM, magnetic tape, floppy disks, optical data storage apparatuses, etc.

According to the present invention, the nodes can create 3D graphics from the lattice-shaped cloth and describe the internal characteristics of the cloth. In addition, it is possible to realistically represent motion by considering forces acting on the cloth, such as gravity, air resistance, the force of the wind, etc., and forces associated with a collision with an external rigid body. In addition, it is possible for anyone to produce a desired animation easily by simply changing node and field values, since the entire animation is possible by changing only several field values on the node. In addition, the volume of data is small compared to a conventional interpolator animation, since it is possible to produce a desired animation by changing field values only. In particular, the VRML and MPEG-4 standards, which are regarded as standards in 3D graphics, fail to support the animation of cloth. However, the present invention can represent the node according to these standards. While the present invention has been described with reference to exemplary embodiments thereof, it will be understood by those skilled in the art that various changes in form and details may be made therein without departing from the scope of the present invention as defined by the following claims.

**Claims**

1. A data structure for cloth animation, comprising:

   a vertical granulation field which defines granulation along a vertical axis of a planar mesh of cloth;
   a horizontal granulation field which defines granulation along a horizontal axis of the planar mesh of cloth;
   a height field which defines the height of the planar mesh of cloth;
   a width field which defines the width of the planar mesh of cloth; and
   a physical characteristics node which defines values for physical characteristics used for calculating external and internal forces acting on the cloth, shift position of the cloth due to the forces, and shift position of the cloth due to collision of the cloth with objects.

2. The data structure for cloth animation according to claim 1, wherein the physical characteristics node, in order to calculate the external forces acting on the cloth, comprises:

   a gravitational acceleration field which defines gravitational acceleration used for calculating gravity;
   a wind velocity field which defines wind velocity used for calculating air resistance;
   a buffer coefficient field which defines a buffer coefficient used for calculating an external buffering force; and
   an air resistance coefficient field which defines a resistance coefficient used for calculating air resistance.

3. The data structure for cloth animation according to claim 1 or 2, wherein the physical characteristics node, in order to calculate the internal forces acting on the cloth, comprises:

   a maximum elongation field which defines a maximum elongation of a spring linking mass-points in a lattice corresponding to the planar mesh of cloth;
   a planar force resistance coefficient field which defines a resistance coefficient of a spring linking each mass-point in the lattice with neighboring mass-points on the right, the left, above, and below;
   a shift deformation resistance coefficient field which defines a resistance coefficient of a spring linking each mass-point with diagonally neighboring mass-points; and
   a torsion resistance coefficient field which defines a resistance coefficient of a spring linking each mass-point with a second neighboring mass-points on the right, the left, above, and below.

4. The data structure for cloth animation according to any preceding claim, wherein the physical characteristics node comprises an inverse mass field which defines the inverse mass of each of the mass-points in the lattice used for obtaining acceleration used for calculating the shift position of the cloth due to the forces acting on the cloth.

5. The data structure for cloth animation according to any preceding claim, wherein the physical characteristics node comprises a time interval field which defines a time interval used for calculating the shift position of the cloth.

6. The data structure for cloth animation according to any preceding claim, wherein the data structure further includes a fixed edge field which defines an edge of the mesh of cloth that is fixed.

7. The data structure for cloth animation according to any preceding claim, wherein the data structure further includes a collision node used for calculating the shift position of the cloth due to collision of the cloth with the object, and for representing the object.

8. The data structure for cloth animation according to claim 7, wherein the collision node comprises:

   a friction coefficient field used for calculating shift velocity of a point at which the object collides with the cloth;
   a kinematics node which defines a virtual object colliding with the cloth; and

a visible shape node used for actually representing the object colliding with the cloth.

9. The data structure for cloth animation according to claim 7 or 8, wherein the kinematics node comprises a geometry node which is at least one of a Box node, a Sphere node, and a TruncatedCone node.

10. A 3D graphics data rendering apparatus comprising:

an analyzer arranged to output a scene graph obtained by discriminating nodes and analyzing fields from 3D graphics data having the data structure described in claim 1;
a calculator arranged to calculate physical quantities for the cloth animation from the node and field of the scene graph and outputting the scene graph including the calculated physical quantities; and
a converter arranged to convert the scene graph including the calculated physical quantities into a 2D image and outputting the 2D image.

11. The 3D graphics data rendering apparatus according to claim 10, wherein the calculator comprises:

a cloth discriminating unit arranged to discriminate the nodes of the cloth in the scene graph;
a cloth mesh creating unit arranged to create the mesh of cloth according to the node and field values;
a physical quantity calculating unit arranged to calculate physical quantities which represent the internal and external forces acting on the cloth and shift position of the cloth due to collision with the object; and
a cloth mesh deforming unit arranged to deform the structure of the cloth by applying the shift position of the cloth calculated by the physical quantity calculating unit to the mesh of cloth, and outputting the scene graph including the physical quantities.

12. The 3D graphics data rendering apparatus according to claim 11, wherein the calculator further comprises:

a colliding object discriminating unit arranged to discriminate whether there is an object colliding with the cloth; and
a collision detection unit arranged to determine whether the cloth collides with the object; and
wherein the physical quantity calculating unit is arranged to calculate the shift position of the cloth due to the collision of the cloth with the object.

13. The 3D graphics data rendering apparatus according to claim 12, wherein the collision detection unit is arranged to detect whether the cloth collides with the virtual object defined by the kinematics node.

14. The 3D graphics data rendering apparatus according to claim 13, wherein the collision detection unit is arranged to detect the location of a collision point when the cloth collides with the virtual object defined by the kinematics node.

15. A 3D graphics data rendering method comprising:

(a) outputting a scene graph obtained by discriminating nodes and analyzing fields from 3D graphics data having the data structure described in claim 1;
(b) calculating physical quantities for the cloth animation from the nodes and fields of the scene graph and outputting the scene graph including the calculated physical quantities; and
(c) converting the scene graph including the calculated physical quantities into a 2D image and outputting the 2D image.

16. The 3D graphics data rendering method according to claim 15, wherein (b) comprises:

(b1) discriminating the nodes of the cloth in the scene graph;
(b2) creating the mesh of cloth according to the node and field values;
(b3) calculating the external and internal forces acting on the cloth and the shift position of the cloth due to the external and internal forces; and
(b4) deforming the structure of the mesh of cloth by applying the calculated shift position to the mesh of cloth.

17. The 3D graphics data rendering method according to claim 16, wherein (b) further comprises, before (b3):

(b5) discriminating whether there is an object colliding with the cloth; and
(b6) detecting whether the cloth collides with the object, and

wherein (b3) further comprises calculating the shift position of the cloth due to the collision.

18. The 3D graphics data rendering method according to claim 17, wherein (b6) comprises detecting whether the cloth collides with the virtual object defined by the kinematics node.

19. The 3D graphics data rendering method according to claim 18, wherein (b6) further comprises detecting the location of a collision point when the cloth collides with the virtual object defined by the kinematics node.

20. A computer-readable recording medium storing a program for executing the method of any of claims 15 to 19.

FIG. 1

FIG. 2

EP 1 569 172 A2

## FIG. 3

```
ClothAnim    {
    field    SFInt32    numHSections    1
    field    SFInt32    numWSections    1
    field    SFFloat    height          1.0
    field    SFFloat    width           1.0
    field    SFNode     clothAnimPhys   NULL
    field    SFString   constrain       ""
    field    MFNode     colliders       []
}
```

## FIG. 4

```
ClothAnimPhys    {
    exposedfield    SFVec3f    gravity            0.0 0.0 0.0
    exposedfield    SFVec3f    wind               0.0 0.0 0.0
    exposedfield    SFFloat    timeStep           0.004
    exposedfield    SFFloat    dissipativeCoeff   0.5
    exposedfield    SFFloat    nodeMassInv        3.429
    exposedfield    SFFloat    airResistCoeff     0.4
    exposedfield    SFFloat    maxElongation      0.03
    exposedfield    SFFloat    stiffnessStructH   2.0
    exposedfield    SFFloat    stiffnessStructW   2.0
    exposedfield    SFFloat    stiffnessShear     2.6
    exposedfield    SFFloat    stiffnessBendH     0.0
    exposedfield    SFFloat    stiffnessBendW     0.0
}
```

FIG. 5A

```
colliders  {
   field    SFFloat    frictionCoeff   0.3
   field    SFNode     kinematics      NULL
   field    SFNode     visibleShape    NULL
}
```

FIG. 5B

```
TruncatedCone  {
   field    SFFloat    height    0.55
   field    SFNode     radius1   0.39
   field    SFNode     radius2   0.39
}
```

FIG. 5C

```
kinematics  {
   field    SFString    ClothAnimModel    " "
}
```

## FIG. 6

IN ⟶ | ANALYZER /610 | ⟶ | CALCULATOR /620 | ⟶ | CONVERTER /630 | ⟶ OUT

## FIG. 7

IN1 ⟶ | NODE DISCRIMINATING UNIT /710 | ⟶ | FIELD ANALYZING UNIT /720 | ⟶ | SCENE GRAPH DRAWING UNIT /740 | ⟶ OUT1

| CHARACTER AND BIT SEQUENCES DISCRIMINATING UNIT | — 730

## FIG. 8

IN2 ⟶ | CLOTH DISCRIMINATING UNIT /810 | ⟶ | CLOTH MESH CREATING UNIT /820 | ⟶ | COLLISION OBJECT DISCRIMINATING UNIT /830 |

OUT2 ⟵ | CLOTH MESH DEFORMING UNIT /860 | ⟵ | PHYSICAL QUANTITY CALCULATING UNIT /850 | ⟵ | COLLISION INSPECTING UNIT /840 |

FIG. 9

```
                    ┌─ 910                    ┌─ 920
             ┌──────────────┐          ┌──────────────┐
             │   MATERIAL   │          │    OBJECT    │
IN3 ─────────│  INFORMATION │──────────│  CONVERTING  │─────── OUT3
             │ READING UNIT │          │     UNIT     │
             └──────────────┘          └──────────────┘
```

FIG. 10

```
                        ┌───────────┐
                        │   START   │
                        └───────────┘
                              │
         ┌────────────────────┤
         │                    ▼
         │          ┌───────────────────┐
         │          │ NODE DISCRIMINATED │─── S1000
         │          └───────────────────┘
         │                    │
         │                    ▼
         │          ┌───────────────────┐
         │          │   FIELD CREATED    │─── S1010
         │          └───────────────────┘
         │                    │
         │                    ▼
         │          ┌───────────────────┐
         │          │   FIELD ANALYZED   │─── S1020
         │          └───────────────────┘
         │                    │
         │                    ▼
         │          ┌───────────────────┐
         │          │  NODE INSERTED TO  │─── S1030
         │          │    SCENE GRAPH     │
         │          └───────────────────┘
         │                    │
         │                    ▼
         │  YES           ╱───────╲
         └──────────────◄  ARE THERE  ►─── S1040
                         ╲ MORE NODES? ╱
                           ╲───────╱
                              │ NO
                              ▼
                        ┌───────────┐
                        │    END    │
                        └───────────┘
```

# FIG. 11

```
                    ┌─────────┐
                    │  START  │
                    └────┬────┘
                         │
        ┌────────────────┼──────────────────────────────┐
        │                ▼                               │
        │    ┌──────────────────────────┐                │
        │    │ NODES OF CLOTH DISCRIMINATED │─ S1100     │
        │    └──────────────┬───────────┘                │
        │                   ▼                            │
        │    ┌──────────────────────────┐                │
        │    │   MESH OF CLOTH CREATED   │─ S1110        │
        │    └──────────────┬───────────┘                │
        │                   ▼          S1120             │
        │             ╱──────────────╲         NO        │
        │            ╱   ARE THERE     ╲─────────────┐    │
        │            ╲ OBJECTS TO COLLIDE╱           │    │
        │             ╲  WITH CLOTH?   ╱             │    │
        │              ╲──────┬───────╱              │    │
        │       ┌─────────────│ YES                 │    │
        │       │             ▼                      │    │
        │       │  ┌──────────────────────┐          │    │
        │       │  │   OBJECTS TO COLLIDE  │─ S1130   │    │
        │       │  │ WITH CLOTH DISCRIMINATED │       │    │
        │       │  └──────────┬───────────┘          │    │
        │       │             ▼                      │    │
        │       │  ┌──────────────────────┐          │    │
        │       │  │   COLLISION OF OBJECT │─ S1140   │    │
        │       │  │  WITH CLOTH INSPECTED │          │    │
        │       │  └──────────┬───────────┘          │    │
        │       │             ▼◄────────────────────┘    │
        │       │  ┌──────────────────────┐               │
        │       │  │ PHYSICAL QUANTITIES CALCULATED │─ S1150
        │       │  └──────────┬───────────┘               │
        │       │             ▼                           │
        │       │  ┌──────────────────────┐               │
        │       │  │   STRUCTURE OF MESH OF │─ S1160       │
        │       │  │    CLOTH DEFORMED     │               │
        │       │  └──────────┬───────────┘               │
        │       │ YES         ▼                           │
        │       └───╱──────────────╲                       │
        │          ╱   ARE THERE     ╲─ S1170              │
        │          ╲ MORE OBJECTS TO COLLIDE╱              │
        │           ╲  WITH CLOTH?   ╱                     │
        │            ╲──────┬───────╱                      │
        │             YES   │ NO                           │
        │      ┌────────────│                              │
        │     ╱──────────────╲                             │
        └────╱  ARE THERE MORE NODES? ╲─ S1180             │
            ╲────────┬───────╱                             │
                     │ NO                                  │
                ┌────▼────┐                                │
                │   END   │                                │
                └─────────┘                                │
```

FIG. 12

```
              ┌─────────┐
              │  START  │
              └─────────┘
                   │
     ┌─────────────▼──────────────┐
     │ ┌────────────────────────┐ │
     │ │ MATERIAL INFORMATION   │ │── S1200
     │ │    OF NODE READ        │ │
     │ └────────────────────────┘ │
     │             │              │
     │ ┌────────────────────────┐ │
     │ │ SCENE GRAPH CONVERTED  │ │── S1210
     │ │     INTO 2D IMAGE      │ │
     │ └────────────────────────┘ │
     │             │              │
     │          ◇ ARE THERE       │
YES  │◇─────────  MORE NODES?  ───── S1220
     └             ◇              
                   │ NO
              ┌─────────┐
              │  END    │
              └─────────┘
```

FIG. 13

FIG. 14

FIG. 15

FIG. 16

```
DEF TSphere1 Transform
{
    children
    [
        DEF Sphere1 Collider
        {
            frictionCoeff 10.0
            kinematics Sphere
            {
                radius 0.33
            }
            visibleShape  Shape
            {
                appearance Appearance
                {
                    material Material
                    {
                    }
                    texture ImageTexture
                    {
                        url "clasph.jpg"
                    }
                }
                geometry Sphere
                {
                    radius 0.28
                }
            }
        }
    ]
}
```

## FIG. 17

```
geometry ClothAnim
{
    clothAnimPhys DEF SharedPhys PhysOfClothAnim
    {
        gravity 0.0 -15.0 0.0
        dissipativeCoeff 0.01
        nodeMassInv 0.1
        airResistCoeff 0.0
    }
    numHSections 8
    numWSections 8
    colliders [
        USE Sphere1
    ]
    constrain "top"
}
```